# EUROPEAN PATENT APPLICATION

(11) **EP 3 851 226 A1**
(43) Date of publication of application: **21.07.2021**
(21) Application number: 20151692.9
(22) Date of filing: 14.01.2020
(51) Int. Cl.: B22F 3/105, B29C 64/153, B33Y 10/00, B33Y 50/02, B22F 5/00, B22F 5/04

(54) **COMPUTER-IMPLEMENTED METHOD OF PROVIDING MANUFACTURING INSTRUCTIONS FOR ADDITIVE MANUFACTURING**

(71) Applicant: Siemens Aktiengesellschaft, 80333 München (DE)
(72) Inventor: Bogner, Jan Pascal, 13357 Berlin (DE)

(57) **Abstract**

A computer-implemented method of providing manufacturing instructions (CAM) for the additive manufacture of a component (10) is presented. The component comprises a critical region (R) and the method comprises, a), providing a geometry of the component (10) by means of a CAD file, b), defining a boundary section (BS) of the geometry including the critical region (R), c), exporting the boundary section (BS) from the CAD file into a machine-readable form, wherein only a single geometry of the component (10) is diverted with at least two sections, comprising the boundary section (BS) and a remaining section (S), wherein no borders are created between the boundary section and the remaining section, and, d), assigning adapted manufacturing parameters (P',CAM) to the boundary section (BS) which differ from manufacturing parameters of the remaining section (S) of the component (10). Moreover, an additive manufacturing method, a computer program product and a corresponding apparatus are presented.

## Description

The present invention relates to a computer-implemented method of providing manufacturing instructions for the additive manufacture of a component, preferably by a powder bed fusion (PBF) approach. The component comprises a critical region or section, such as site which is vulnerable to manufacturing errors, like holes or strongly overhanging regions. Moreover, a corresponding additive manufacturing method, a computer program product and an apparatus for the additive manufacture are subject of the present invention.

Particularly the presented method relates to so-called powder bed fusion. Such PBF techniques comprise e.g. selective laser melting (SLM), selective laser sintering (SLS) or electron beam melting (EBM).

Furthermore, the mentioned component preferably denotes a high-performance component, such as a component applied in power generation, aerospace or the automotive business sector.

The component may as well be a component of a turbo machine, e.g. in the flow path hardware of a gas turbine. The component may, thus, be made of a nickel-or cobalt-based superalloy.

Turbo machines, particularly those for power generation purposes, are subject to steady development in order to increase energy conversion efficiency. This development is actually gaining significance in view of restrictions which need to be implemented to comply with climate change and global warming mitigation. Further progress in turbine efficiency is e.g. complicated as operation temperatures of the hot gas path of gas turbines, would yet have to be increased. At the same time there is a stringent demand to apply the turbo machines in a less steady operational mode, e.g. on demand in peaker plants when there is a high demand for electricity, for example. This poses significant challenges particularly for the materials applied in the given machines, as for example the discontinuous (on demand) use highly increases material fatigue due to the involved warming and cooling cycles, and therewith the number of the so-called "equivalent operating hours". Thermo-mechanical fatigue and creep behaviour are here the dominant issues which pose the main challenges for the turbo machine materials.

Additive manufacturing, particularly powder-bed methods, have proven to be promising for the fabrication of prototypes or complex components, such as components of complex or filigree design, or functionally cooled components. Further, the additive manufacture stands out for its short chain of process steps which in turn enables material economization and a particularly lowered lead time.

Further additive manufacturing (AM) approaches relate to "Directed Energy Deposition (DED)", such as laser cladding, electron beam or plasma welding, metal inkjet molding (MIM), so-called sheet lamination methods, thermal spraying (VPS LPPS) or cold spray (GDCS) techniques.

Apparatuses or setups for the intended AM methods usually comprise a manufacturing or build platform on which the component is built layer-by-layer after the feeding of a layer of base material which may then be melted, e.g. by an energy beam, such as a laser, and subsequently solidified. The layer thickness is determined by a recoater that automatically distributes a required layer of a powdery material on a manufacturing plane and removes excess material from the build space. Typical layer thicknesses amount to between 20 µm and 40 µm.

During the manufacture, said energy beam scans over the surface and melts the powder on selected areas which may be predetermined by a CAD-file according to the geometry of the component to be manufactured. Said scanning or irradiation is preferably carried out in a computer-implemented way or via computer aided means, such as computer-aided manufacturing (CAM) instructions, which may be present in the form of a dataset. Said dataset or CAM instructions may, in turn, be subject or refer to a computer program or computer program product.

A computer program product as referred to herein may relate to computer program means constituting or comprising a storage medium like a memory card, a USB stick, a CD-ROM, a DVD or a file downloaded or downloadable from a server or network. Such product may be provided by a wireless communication network or via transfer of the corresponding information by the given means.

The computer program product may include or be stored or provided by a computer-readable storage medium, storing application, corresponding programs, program modules, scripts, source code, program code, object code, machine code, executable instructions in general, and/or the like. Such media include all computer-readable media, including volatile and non-volatile media.

A method for the irradiation of a material layer and method of providing a corresponding dataset, an apparatus and computer program product is e.g. described in EP 3 542 927 A1.

EP 3 022 008 B1 is further concerned with a method of manufacturing a component and an according optical irradiation device being configured for pulsed laser irradiation.

Inspired of a great design freedom and further striking advantages of additive manufacturing, current powder bed fusion approaches particularly suffer from poor structural quality of critical component regions, such as overhangs (cf. so-called "downskin" faces) or other superficial regions, or internal regions, such as holes channels voids or the like.

The reason for the difficulty in establishing said regions of features is amongst others, the so-called "stair step" effect which causes structural irregularities on the scale of the applied layer thickness.

Further, accumulation of excessive or destructive heat in general is a severe challenge, e.g. at overhanging areas which are surrounded mainly by powdery material. A powder, however, hardly conducts heat. Consequently, heat transfer or dissipation from the as-built structure or the powder bed is critical. Since melt pool extensions or depths in a given layer usually amount to between 3 to 5 times of the applied layer thickness, it is apparent that establishing such overhangs or comparable features with sufficient dimensional accuracy, structural quality and even reproducibility is not solved up to now in a satisfying manner.

All these effects are even stronger, the greater the overhang angle or extension of the respective region is. Thus, for inner regions of features, such as cooling channels, which always form overhanging angles, adaptations need to be applied to increase geometrical accuracy and structural quality.

To prevent the presented problems, usually design changes are applied. For cooling channels, e.g. so-called hole corrections are employed, such as that a circular hole can be reshaped in the upper half by an elliptical or arch-like shape.

During usual build job preparation, particularly via CAM a provided CAD (computer-aided design) of the desired component is "sliced" and the relevant scanning or irradiation vector paths are determined. Said reshaping of the CAD may particularly effect that approximately the desired geometry is obtained in the end. Such change in design is, however, complex, time-consuming and only applicable for specific geometries

Even though there are specific solutions investigated, there is, however, no generic solution available yet for complex free-form component design consisting of numerous critical surfaces, overhangs or other complex features.

It is an object of the present invention to provide means with which said design "reshaping" or design adaptation can be dispensed with. Particularly, the presented solution aims at accounting for process-related flaws, artefacts, distortions or inaccuracies apart from the provided CAD file, such as by way of providing manufacturing instructions which account for the given issues.

The mentioned object is achieved by the subject-matters of the independent claims. Advantageous embodiments are subject-matter of the dependent claims.

An aspect of the present invention relates to a computer implemented method for providing manufacturing instructions for the additive manufacture of a component which comprises a critical region, such as a region which is difficult to establish or vulnerable to manufacturing flaws or defects due to the above-mentioned issues, such as hotspots or regions being prone to thermal and/or mechanical damage, e.g. caused by cracks or ruptures during the process.

The method comprises providing a geometry of the component by means of a CAD file.

The method further comprises defining a boundary section of the geometry including or encompassing the critical region, preferably over the critical regions full contour, dimension or extension. Preferably, the boundary section only includes or encompasses the critical region.

Like the geometry of the component as represented by the CAD file, the boundary section preferably further relates to a geometric boundary.

The method further comprises exporting, reading in or converting the boundary section from the CAD file into a machine readable or machine executable form of format, wherein only a single geometry or corresponding dataset is diverted, transferred or rendered with at least two sections, comprising the boundary section and a remaining section, and wherein particularly no component borders or confines are created or defined between or at an interface of the boundary section and the remaining section. Consequently, there are preferably no contour scans automatically provided and/or required. A conventional software solution, however, requires contour scans to be provided when a geometry is split into separate sub-files.

The mentioned "remaining section" shall particularly denote a remainder of the component's geometry when the provided CAD file is reduced by the given boundary section. Additionally or alternatively, the remaining section may constitute just that part of the geometry of the component which shall be realised with conventional or default manufacturing parameters.

The method further comprises assigning manufacturing parameters to the boundary section which differ from the parameters of or assigned, or selected for the remaining section. Preferably, the manufacturing parameters are adapted manufacturing parameters as compared to those assigned or selected for the remaining section of the component.

As an advantage of the present invention, the assignment of different scan parameters for a single component or part is achieved in a generic way and per se independent and/or readily applicable for any desired component design. Advantageously, also geometric algorithms can be dispensed with, which partly allow for a parameter adaptation for parts with well-determined and simple geometries.

In an embodiment, the critical region indicates a surface or edge feature in the geometry of the component, such as a (superficial) "hot spot" and/or a "downskin" surface. Said feature may e.g. be selectable in the build job preparation of the respective part in the respective software tool, CAD or CAM-functionality. The term "hot spot" (see above) shall denote a site in the components design which is particularly prone to overheating, thermal and/or mechanical damage, such as by weld cracks or the like.

In an embodiment the critical region indicates an internal hole, channel, hollow or void. According to this embodiment, the region may as well relate to a surface region or superficial region of the component.

In an embodiment, the boundary section is chosen such that it separates the critical region from the remaining section by an expedient geometrical distance, space or interval. Said space is, preferably, chosen as a margin or area in which the component's geometry is desired to be (layerwise) established with adapted, tailored of improved parameters, and thus properties. In other words, said region is that one region which, when established according to the present invention, provides the component as a whole with an improved structural, mechanical and/or dimensional properties in the relevant region.

In an embodiment, the adapted manufacturing parameters comprise scanning parameters, such as a scanning speed, hatch distance, beam offset or an overlap for the manufacture of the component, preferably by a powder bed fusion method.

In an embodiment, the adapted manufacturing parameters comprise irradiation parameters, such as a laser power, for the manufacture of the component, preferably by a powder bed fusion method.

In an embodiment, the adapted manufacturing parameters comprise scanning parameters of a pulsed-wave (pw) irradiation mode, e.g. as compared to a continuous wave (cw) irradiation mode for the remaining section. Pulsed wave laser radiation creates, through input of a tailorable and/or discontinuous energy package, individual melt lenses or droplets, instead of extended or long melt pools as in the case of a continuous-wave laser irradiation. These melt lenses are smaller, shallower and carry less energy causing less heat accumulation and can, thus, create a much more accurate part contour (see further below).

In an embodiment, a plurality of boundary sections are defined and each of which is exported such that only a single geometry of the component is diverted with a plurality of boundary sections and the remaining section, wherein no borders are created between the boundary sections and the remaining section respectively and, wherein e.g. different, adapted manufacturing parameters assigned to the different boundary section which each differ from manufacturing parameters assigned to or of the remaining geometry of the component.

In an embodiment the method comprises generating machine-readable and/or machine-executable manufacturing instructions from the exported boundary section(s) and the assigned adapted manufacturing parameters. This step may be an expedient or advantageous measure, particularly when a data format for the execution of the build job or manufacture of the component needs to be changed or adapted.

In an embodiment, the boundary section(s) is/are exported into and/or the machine executable manufacturing instructions are/is generated in a STL (cf. Stereo Lithography) file, a VRML (Virtual Reality Modelling Language) file, numerical code or machine control instruction(s) data or information, such as G-code.

A further aspect of the present invention relates to a method of additive manufacturing of the component comprising executing the generated manufacturing instructions in a control, such as of an apparatus, for the manufacture or build job of the component, thereby establishing the component in a layerwise manner, preferably by a powder bed fusion method, such as by selective laser melting or electron beam melting.

A further aspect of the present invention relates to a computer program and/or computer program product comprising instructions which, when a corresponding program is executed by a computer, cause the computer to carry out the steps of the method of providing manufacturing instructions as described.

A further aspect of the present invention relates to an apparatus, for additive manufacturing, e.g. comprising the mentioned computer program product, and being configured as a build processor for the additive manufacture of the component, wherein the apparatus further comprises an interface with the manufacturing hardware or device.

Advantages and embodiments relating to the described method of providing manufacturing instructions and/or the described computer program product may as well pertain or be valid with regard to the mentioned additive manufacturing method and/or the apparatus as described.

Further features, expediencies and advantageous embodiments become apparent from the following description of the exemplary embodiments in connection with the Figures.
Figure 1 indicates in a schematic sectional view, aspects of an additive manufacturing process of the component by way of powder bed fusion.
Figure 2 indicates a schematic technical issues in the buildup which limit a structural result and/or dimensional accuracy of the component due to manufacturing -related artefacts.
Figure 3 indicates a conventional means for addressing manufacturing-related artefacts as indicated in Figure 2.
Figure 4 indicates in a schematic flow chart method steps of the present invention.
Figure 5 indicates in a simplified way a side or sectional view of the component or its design (CAD) and further illustrate method steps of the present invention.
Figure 6 indicates in a simplified way a side or sectional view of the component or its design (CAD) and further illustrate method steps of the present invention in an alternative embodiment.

Like elements, elements of the same kind and identically acting elements may be provided with the same reference numerals in the Figures. The Figures are not necessarily depicted true to scale and may be scaled up or down to allow for a better understanding of the illustrated principles. Rather, the described Figures are to be construed in a broad sense and as a qualitative base which allows a person skilled in the art to apply the presented teaching in a versatile way.

The term "and/or" as used herein shall mean that each of the listed elements may be taken alone or in conjunction with two or more of further listed elements.

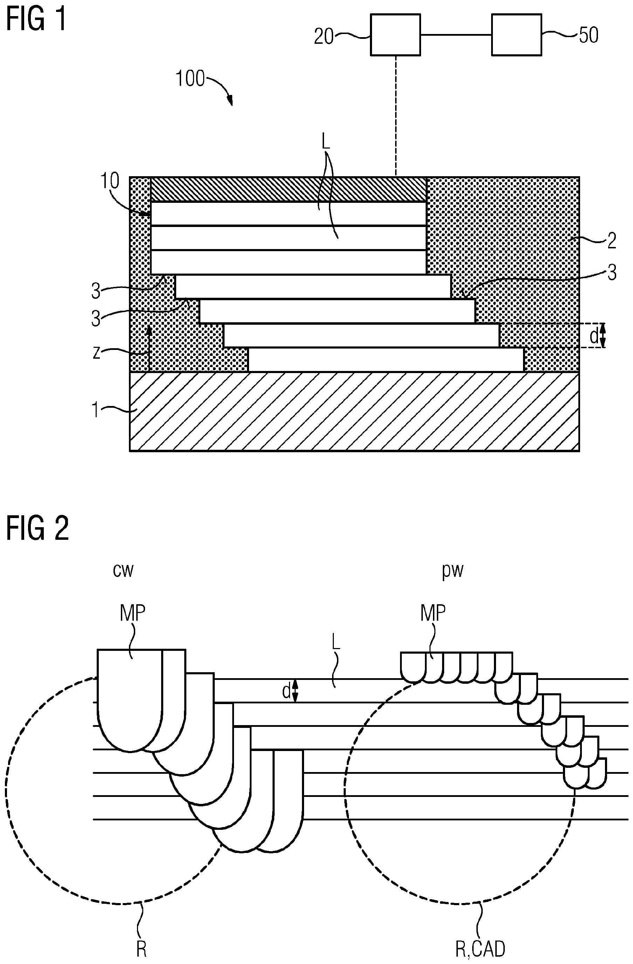

Figure 1 indicates in a sectional view a layerwise powder bed fusion process for the manufacture of the component 10. Said approaches e.g. includes selective laser melting (SLM), selective laser sintering (SLS) and electron beam melting (EBM). Thereby a powdery base material layers of a powder 2 is distributed on top of the substrate or build platform 1 in successive manner. After each distribution, said layer is exposed to an energy beam, such as a laser or electron beam, as provided by an irradiation device 20 (the corresponding beam is indicated by the dashed line only). According to the desired geometry of the component, the powder 2 is, thus, selectively melted or sintered and subsequently solidified for each layer L. The layer thickness d of the layers L may conventionally amount to between 20 µm and 40 µm. For the beam controls and/or build job preparation means, an according additive manufacturing apparatus (cf. reference numeral 100) may further comprise an apparatus or control device 50. Said apparatus 50 may further comprise or be configured as data processing unit or additive manufacturing build processor. Even though this is not explicitly indicated, necessary beam optics, such as mirrors or other beam deflection means, may be used.

Said powder-bed processes usually require the component 10 to be build up along a determined build direction, i.e. presently the vertical z-direction.

Such processes further excel in a great design freedom. However, there are as well significant limitations, particularly when the buildup of high-performance materials, such as superalloys, for gas turbine or aerospace applications is concerned. To this effect, at first steps or edges are indicated in Figure 1 by reference numeral 3. Said steps 3 are of course only present on the micrometer scale according to the chosen layer thickness d. Nevertheless, these steps (cf. "stair-step" effect above) may cause an adverse surface roughness or provide centers or sites for crack or rupture initiation. Particularly when downskin surfaces or overhangs (cf. steps on the left in Figure 1 and pointing downwards) are concerned, further adverse effects occur, namely the problem of (excess) heat accumulation at said overhangs. As these overhangs are located directly above a loose powder fraction, mechanical support as well as the heat dissipation of said (thermally quasi-insulating) powder, is very critical during the process.

As a solution, support structures could be provided. These are, however, in turn very critical to be removed later on, particularly when highly rigid material is concerned.

The component 10 as referred to herein may particularly relate to a part or an article of complex shape, such as with filigree portions of structures. Preferably, said component 10 is made of a high-performance material, such as a material of great strength and/or thermal resistivity, like a superalloy. Particularly, said part may constitute a part of a steam or gas turbine component, such as a blade, vane, shroud, shield, such as heat shield, tip, segment, insert, injector, seal, transition, burner, nozzle, strainer, orifice, liner, distributor, dome, boost, cone, lance, plate, resonator, piston or any corresponding retrofit kit. Alternatively, said component may relate to another or similar component.

Figure 2 indicates in a simplified schematic, qualitatively, effects of the beam-induced melt pools in different layers L stacked on top of each other during the additive buildup of the component 10.

On the left, a situation is shown in which a continuous wave (CW) mode of irradiation is used by the respective beam. The dashed circle and reference numeral R indicates a contour of a void, hole, cavity or similar critical region in the component's design. The features indicated with MP shall illustrate a melt pool (history) of an energy beam in the concerned layers L of the critical region R. Said melt pools MP are depicted in an overlapping manner for the sake of better illustration. It is particularly shown that vertical extensions of such melt pools MP amounts to roughly between three to five times the layer thickness d. Therefrom it is apparent that the manufacture of large overhangs is very critical, in terms of structural quality as well as dimensional accuracy. The situation shown on the left in Figure 2 indicates the respective melt pools MP stemming from a pulsed wave (pw) beam operation during scanning. Consequently - as indicated by the much smaller melt pools MP as compared to the left side of Figure 2 - the manufacturing result concerning the realisation of the upper overhanging section of the channel or bore is dimensionally much more accurate. This is because of the tailored energy applied for the irradiation of the structure which define said hole at the top. As the energy input, such as per time average unit, is much smaller, also the heat accumulation is smaller. On the contrary, the pulsed wave irradiation mode is of course much more time-consuming and, thus, inefficient for the overall manufacture.

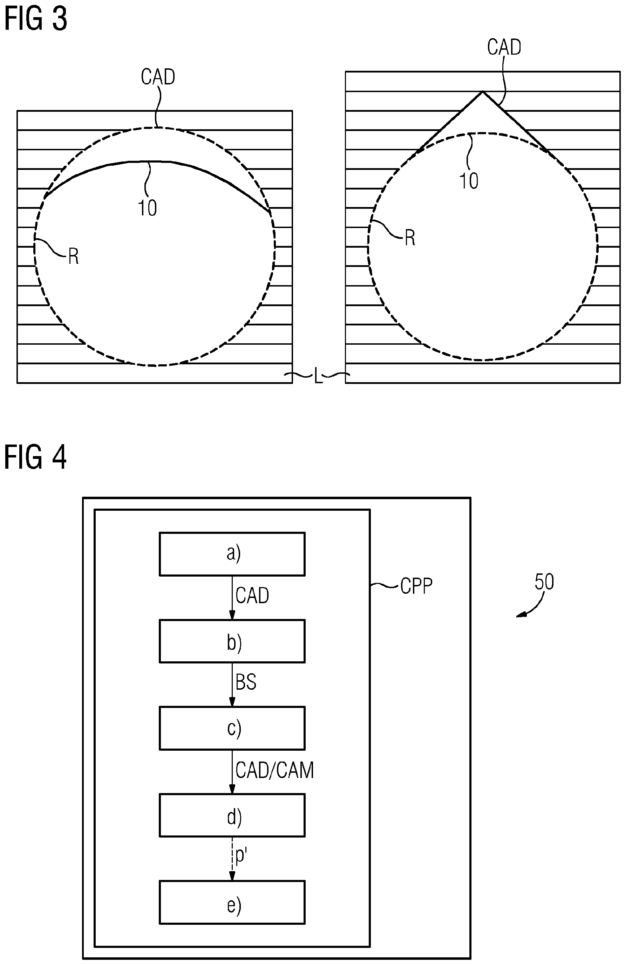

These benefits and drawbacks need to be weighed out for an optimal and efficient manufacturing process. To this effect, the present invention proposes the method as indicated in Figure 4 below, wherein - inter alia - adapted manufacturing parameters are assigned to the concerned regions of the component 10, i.e. the critical regions.

Figure 3 indicates in a further simplified and qualitative way, a manufacturing artefact which manifests in the manufacture of bores or circular cooling channels (cf. also Figure 2). Particularly two different sectional views of, e.g. cooling, holes as critical regions of the component 10 are indicated side-by-side.

On the left, the dashed circle indicates an aimed geometry of the cooling channel, as indicated by CAD means, as the design of such an AM part is usually provided by way of a CAD file. The depicted circle may have dimensions on the millimeter to centimeter scale, such as between 1 and 10 mm, or more. The dashed contour inside the circle is indicated with numeral 10 which shall indicate that this is the actual or resulting course or shape of the channel, when a conventional build job is processed based upon the given CAD file. In other words, a partial collapse or shrinkage of the upper, overhanging, part of the channel occurs due to the effects described by way of Figure 2. Conventionally, this artefact is addressed by redesigning, reshaping, or adaptation of the component design which will then be transferred or rendered to an according build processor software for the actual manufacture.

Such redesigning is shown on the right in Figure 3, wherein the CAD file is adapted in the upper part of the channel's course by a contour having a recess or "pitched" roof. When such CAD geometry is implemented during conventional manufacture, usually an approximately circular shape will be the result.

Figure 4 shows a schematic flow chart indicating method steps of the present invention. The presented method is, preferably, a computer-implemented method of providing manufacturing instructions for the additive manufacture of the component 10 which a critical region R, as described. The method comprises, a), providing a geometry of the component 10 by means of a CAD file.

The method further comprises, b), defining a boundary section BS of the geometry including the critical region R.

The method further comprises, c) exporting the boundary section BS from the CAD file into a machine-readable or-executable form, wherein only a single geometry of the component 10 is diverted with at least two sections, comprising the boundary section BS and a remaining section S, wherein no borders are created between or at the interface of said sections (see below). Said machine-readable form or format may relate to any format or intermediate format used in computer-controlled manufacturing in general, such as an STL format, VRML format, a format suitable for numerical or machine control instructions like G-code, or the like.

The method further comprises, d), assigning adapted manufacturing parameters P' to the boundary section BS as compared to the remaining section S of the component 10.

Optionally, the method may further comprise, e), generating machine-executable manufacturing instructions from exported boundary sections BS and the assigned adapted manufacturing parameters P'. Said machine executable manufacturing instructions may relate to the above-mentioned format as well. Alternatively, the above format may constitute only an intermediate format which may be further processed, diverted, converted, or exported into an STL, VRML or a "slicing" format like CLI ("common layer interface") or SLI, or 3MF format, such as from an STL format. The particulars of this conversion or data processing may depend on the specific machine or device architecture of additive manufacturing hardware (cf. reference numeral 100 above).

Particularly the step of exporting c) only enables the assigning of adapted or improved manufacturing parameters P' to the boundary section. This is actually a functionality which is not yet available for a state-of-the-art setups or architectures. In current solutions, immediately so-called part boundaries or borders are created for any defined subsections of the components, as each of said sections is taken as a single part. According to the present invention, this constraint is suspended and a single geometry is implemented with different parameter setting.

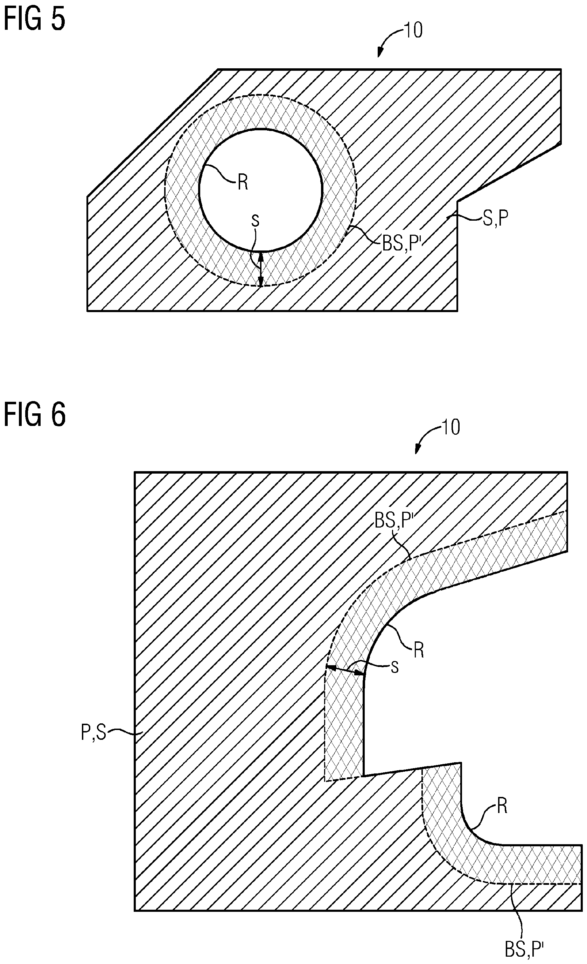

Figure 5 illustrates in a simplified view, measures of the present invention by way of a partial sectional view of the component. As a particularly critical region for the manufacture, again a circular (in cross-section) hole, void a cavity is indicated with numeral R. It is further shown that the cross-sectional view of Figure 5 comprises a section or remaining section (cf. hatching) and a boundary section which is indicated by the crosshatching. More particularly it is shown that the boundary section BS extends around the critical region of the depicted circle. Further, the boundary section BS comprises or constitutes a width, margin or distance by which the remaining section is at the same time separated from the region of interest. According to the present invention, the adapted parameters P', such as referring to or specified energy input or irradiation mode, may be tailored to the respective demand of the critical region R.

The expression "hatching" in the previous paragraph relates only to the imagery distinction of the sections and must not be confused with the hatching strategy, i.e. aerial irradiation strategy which may as well be applied for the remaining section of the component.

Figure 6 illustrates in a simplified view, measures of the present invention by way of a partial sectional view of the component in an alternative embodiment. As compared to the indication of Figure 5, Figure 6 shows an embodiment, wherein the component 10 or as the case may be, it's geometry, comprises a plurality, more specifically two different critical regions R. For each of said critical regions R, preferably a separate boundary section BS is defined (and exported according to the present invention). Thus, there may be a plurality of different sections of the component 10 which demand for being processed with adapted manufacturing parameters P'. Accordingly, each of said sections (may be more than two different ones) are exported such that only a single geometry of the component 10 is diverted with a plurality of boundary sections and the remaining section, wherein no borders are created between the remaining section and the respective boundary sections. Furthermore, for each of said boundary sections, having e.g. different distances s (not explicitly indicated), different, such as specifically tailored, adapted manufacturing parameters P' are assigned.

The upper boundary section BS as shown in Figure 6 includes or encompasses an overhanging region ("downskin" surface) of the component, whereas the lower boundary section BS only in-eludes a surface or edge region with an "upskin" surface without any overhangs. Thus, the latter region is less critical to manufacture, may however still require an adapted set of manufacturing parameters.

Generally the parameters assigned, chosen or adapted for the boundary sections or its manufacture, may be more complex or more time-consuming, e.g. as beam or scanning velocity may be sharply reduced so that it is not efficient if the whole component were to be irradiated with an adapted set of parameters like the one chosen for the critical regions.

The number of process or manufacturing parameters P, such as scanning/or irradiation parameters, may pertain to a scanning speed, a hatch distance, a beam offset, a beam overlap, a laser or beam power or laser or beam energy or an irradiation mode. Furthermore, said parameters may relate to a nominal layer thickness, a melt pool geometry or dimension, a heat impact per volume or area unit, a laser wavelength, a beam angle, and the like.

## Claims

1. Computer-implemented method of providing manufacturing instructions (CAM) for the additive manufacture of a component (10), which comprises a critical region (R), the method comprising:
- a) providing a geometry of the component (10) by means of a CAD file,
- b) defining a boundary section (BS) of the geometry including the critical region (R),
- c) exporting the boundary section (BS) from the CAD file into a machine-readable form, wherein only a single geometry of the component (10) is diverted with at least two sections, comprising the boundary section (BS) and a remaining section (S), wherein no borders are created between the boundary section (BS) and the remaining section (S), and
- d) assigning adapted manufacturing parameters (P', CAM) to the boundary section (BS) which differ from manufacturing parameters of the remaining section (S) of the component (10) .

2. Method according to claim 1, wherein the critical region (R) indicates a surface or edge feature in the geometry of the component (10), such as a superficial hot spot and/or a downskin surface.

3. Method according to claim 1, wherein the critical region (R) indicates an internal hole, channel, hollow or void.

4. Method according to one of the previous claims, wherein the boundary section (BS) is chosen such that it separates the critical region (R) from the remaining section (R) by an expedient geometrical distance (s).

5. Method according to one of the previous claims, wherein the adapted manufacturing parameters (P') comprise scanning parameters, such as a scanning speed, hatch distance, beam offset and/or a beam overlap, and/or irradiation parameters, such as a laser power, for the manufacture of the component (R), preferably by a powder bed fusion (PBF) method.

6. Method according to claim 5, wherein the adapted manufacturing parameters (P') comprise scanning parameters of a pulsed wave (pw) irradiation mode as compared to those of a continuous-wave (cw) irradiation mode for the remaining section (S).

7. Method according to one of the previous claims, wherein a plurality of boundary sections (BS) are defined and each of which is exported such that only a single geometry of the component (10) is diverted with the plurality of boundary sections (BS) and the remaining section (S), wherein no borders are created between the boundary sections (BS) and the remaining section (S) respectively, and wherein different, adapted manufacturing parameters (P') are assigned to the different boundary sections (BS) which each differ from manufacturing parameters of the remaining section (S).

8. Method according to one of the previous claims, comprising, e), generating machine-executable manufacturing instructions (CAM) from the exported boundary section(s) (BS) and the assigned adapted manufacturing parameters (P').

9. Method according to one of the previous claims, wherein the boundary section(s) (BS) is/are exported into and/or the machine-executable manufacturing instructions (CAM) are/is generated in a STL file, VRML file, a numerical code or machine control instruction, such as G-code.

10. Method of additive manufacturing a component (10) comprising executing the generated manufacturing instructions (CAM) in a control of an apparatus (50) for the manufacture of the component (10), thereby establishing the component (10) in a layerwise manner, preferably by a powder bed fusion method, such as SLM or EBM.

11. Computer program product (CPP) comprising instructions which, when the program is executed by a computer, cause the computer to carry out the steps of the method of one of claims 1 to 9.

12. Apparatus (50) for additive manufacturing which is configured as a build processor for the additive manufacture of the component (10) according to claims 10, wherein the apparatus (50) further comprises an interface with a manufacturing hardware (100).
